# EUROPÄISCHE PATENTSCHRIFT

(11) **EP 2 462 808 B1**
(45) Veröffentlichungstag und Bekanntmachung des Hinweises auf die Patenterteilung: **13.11.2019**
(21) Anmeldenummer: 11192734.9
(22) Anmeldetag: 09.12.2011
(51) Int. Cl.: A21B 3/04, F24C 15/32

(54) **DAMPFGARGERÄT**
STEAM OVEN
APPAREIL DE CUISSON À VAPEUR

(30) Priorität: 13.12.2010 EP 10290652
(43) Veröffentlichungstag der Anmeldung: 13.06.2012
(73) Patentinhaber: BSH Hausgeräte GmbH, 81739 München (DE)
(72) Erfinder: Clauss, Christian, 67210 Obernai (FR)

(56) Entgegenhaltungen:
- EP-A1- 1 514 475
- DE-A1- 19 843 842
- US-A1- 2007 215 592

## Beschreibung

Die Erfindung betrifft ein Dampfgargerät, aufweisend eine Gargerätemuffel, welche einen mit Dampf beaufschlagbaren Garraum begrenzt, mindestens eine Wassereinlassöffnung zum Einlass von Wasser in den Garraum und einen in dem Garraum befindlichen, durch das Wasser befüllbaren Wasseraufnahmebereich.

Es sind Dampfgargeräte bekannt, bei denen sich in einem mittigen Bereich eines Bodens einer Gargerätemuffel eine vertiefte Wasseraufnahmeschale befindet. Die Wasseraufnahmeschale ist mittels eines sich stutzenförmig in den Garraum erstreckenden Wassereinlasses befüllbar, welcher sich von einer Rückwand der Gargerätemuffel bis über die Wasseraufnahmeschale erstreckt. Aus dem Wassereinlass austretendes Wasser fällt somit direkt in die Wasseraufnahmeschale.

Es ist ferner ein Dampfgargerät bekannt, bei dem sich der stutzenförmig in den Garraum erstreckende Wassereinlass an einem unteren Rand einer Seitenwand der Gargerätemuffel befindet. Hierbei kann aus einer Wassereinlassöffnung des Wassereinlasses austretendes Wasser über eine bodenseitige Rinne in eine Wasseraufnahmeschale fließen, welche sich an einem rückwärtigen oder hinteren Rand des Bodens befindet.

DE 198 43 842 A1 betrifft ein druckloses Dampfgargerät mit einer Steuerelektronik, mindestens einen Heizkörper zum Erhitzen eines Wasser enthaltenen Dampferzeugers und mit einem Gargut aufnehmenden Garraum, sowie mit einem Garraumboden als Auffangvorrichtung für Kondensat. Um ein Dampfgargerat zu schaffen, bei dem eine Kondensatvermehrung im Garraumbereich verhindert und der Nachsorgeaufwand möglichst gering gehalten wird, erfolgt eine Trennung des vom Gargut und des von den Garraumwänden abtropfenden Kondensates. Das von den Garraumwänden stammende Kondensat ist unverschmutzt und ein am Garraumboden angeordnetes Heizelement mit einer den Garprozess nicht beeinflussenden Wirkung führt das Kondensat in Form von Dampf wieder dem Garprozess zu.

EP 1 514 475 A1 offenbart einen Dampfgarofen mit einer Muffel, die einen Garraum definiert, einen Dampferzeuger, eine Vielzahl von Dampfzuführrohren, um den vom Dampfgenerator erzeugten Dampf in den Garraum zu leiten, einschließlich Auslassenden, die an mehreren vorbestimmten Positionen im Garraum angeordnet sind, um den Dampf gleichmäßig in den Garraum zu verteilen, und mehrere Dampfventile, die an vorbestimmten Abschnitten der mehreren Dampfzuführrohre angebracht sind. Die Vielzahl von Dampfventilen steuert unabhängig die Vielzahl von Dampfzuführrohren, um Positionen zu ändern, von denen der Dampf in den Garraum abgegeben wird.

US 2007/215592 A1 offenbart einen Ofen mit einer Wärmezirkulationsvorrichtung. Dieser umfasst ein Gehäuse, das mit einem Garraum zum Rösten und Dämpfen versehen ist. Die Dämpfvorrichtung besteht aus einem Verbindungsrohr, einem Pumpenmotor, einem Auslassrohr und einem Dampferzeuger zur Erzeugung von Dampf, der von einem Heißluft-Gebläse umgewälzt wird, um in einem Gleichgewichtszustand in der Kammer zu zirkulieren.

Es ist die **Aufgabe** der vorliegenden Erfindung, ein verbessertes Dampfgargerät bereitzustellen.

Diese Aufgabe wird gemäß den Merkmalen des unabhängigen Anspruchs gelöst. Bevorzugte Ausführungsformen sind insbesondere den abhängigen Ansprüchen entnehmbar.

Die Aufgabe wird gelöst durch ein Dampfgargerät, aufweisend eine Gargerätemuffel, welche einen mit Dampf beaufschlagbaren Garraum begrenzt, mindestens eine Wassereinlassöffnung zum Einlass von Wasser in den Garraum und einen in dem Garraum befindlichen, durch das Wasser befüllbaren Wasseraufnahmebereich. Die mindestens eine Wassereinlassöffnung ist garraumseitig flächenbündig zu einer sie umgebenden Wand der Gargerätemuffel angeordnet. Dadurch können Schmutzablagerung vermieden werden, wie sie typischerweise bei stutzenförmigen Wassereinlässen auftreten. Zudem ist ein Bereich um die flächenbündige Wassereinlassöffnung gut reinigbar, insbesondere abwischbar. Darüber hinaus ergibt sich eine klarere und hochwertigere Anmutung. Auch wird durch den Verzicht auf den Stutzen eine besonders einfache und preisgünstige Herstellung ermöglicht. Darüber hinaus ist die flächenbündige Wassereinlassöffnung vergleichsweise unempfindlich gegenüber einer Beschädigung.

Ferner ist die mindestens eine Wassereinlassöffnung bei Vorderansicht in den Garraum hinter einer in den Garraum ragenden Auflage für einen Gargutträger angeordnet ist. Dadurch kann eine Beschädigung in einem Bereich der mindestens einen Wassereinlassöffnung verhindert werden, z.B. verursacht durch Gargeschirr. Insbesondere für diesen Fall kann sich die Wassereinlassöffnung in einer Seitenwand in einer Nähe einer Rückwand befinden. Die die Wassereinlassöffnung schützende Auflage ist im Vergleich zu anderen Auflagen verkürzt. Der Gargutträger kann z.B. eine in einer Seitenwand der Garraummuffel eingeprägte Auflage oder eine Schiene eines Ablagegitters sein.

Es ist eine Ausgestaltung, dass die mindestens eine Wassereinlassöffnung ein Dichtelement aufweist, welches für (aus der Wassereinlassöffnung in den Garraum einfließendes) Wasser durchlässig und für Dampf undurchlässig ist. So kann eine ungewollte Dampfabfuhr durch die mindestens eine Wassereinlassöffnung während eines Dampfbetriebs verhindert werden.

Mindestens eine dedizierte Dampfauslassöffnung kann beispielsweise in einem oberen Bereich der Gargerätemuffel, insbesondere einer Decke, vorhanden sein, aber z.B. auch in einer Seitenwand (einschließlich Rückwand).

Es ist noch eine Ausgestaltung, dass die mindestens eine Wassereinlassöffnung auch als eine jeweilige Dampfauslassöffnung eingerichtet und vorgesehen ist. Dadurch kann auf eine dedizierte Dampfauslassöffnung verzichtet werden. Die Wassereinlassöffnung ist dann sowohl für Wasser als auch für Dampf durchlässig.

Es ist auch eine Ausgestaltung, dass die Wassereinlassöffnung mittels eines Schlauchs gebildet wird. Der Schlauch kann beispielsweise eng in einer zugehörigen Aussparung in der Gargerätemuffel eingesteckt sein. Der Schlauch kann an seinem anderen Ende direkt mit einem Wasserreservoir, einem Wasseranschluss (insbesondere Frischwasseranschluss), einem Ventil oder einer Pumpe usw. verbunden sein. Diese Ausgestaltung benötigt besonders wenige Teile und ist entsprechend einfach zu montieren sowie preiswert.

Es ist außerdem eine Ausgestaltung, dass der Wasseraufnahmebereich mittig in einem Boden der Gargerätemuffel ausgebildet ist. So kann eine räumlich gleichmäßige Bedampfung erreicht werden. Es ist eine Weiterbildung, dass der Wasseraufnahmebereich ein tiefster Bereich des Garraums ist.

Es ist noch eine weitere Ausgestaltung, dass der Wasseraufnahmebereich in die Gargerätemuffel eingeprägt ist. So wird eine einfache Herstellung ermöglicht.

Der Wasseraufnahmebereich kann eine dedizierte Heizung zu ihrer Erwärmung zugeordnet sein, insbesondere an ihrer Unterseite.

Es ist noch eine weitere Ausgestaltung, dass die Gargerätemuffel für aus der Wassereinlassöffnung in den Garraum fließendes Wasser rinnenlos (ohne eine Rinne zur Wasserführung von der Wassereinlassöffnung zu dem Wasseraufnahmebereich) ausgestaltet ist. So wird eine einfachere und preiswertere Ausgestaltung der Gargerätemuffel als auch eine bessere Reinigbarkeit ermöglicht.

Es ist ferner eine Ausgestaltung, dass die Wand, an welcher die Wassereinlassöffnung angeordnet ist, eine Seitenwand ist. Dies verbessert eine Anmutung weiter.

Das Dampfgargerät kann ein reiner Dampfgarer oder ein Kombinationsgerät mit einer Dampfgarfunktion sein, z.B. ein Backofen mit einer Dampfgarfunktion, ein Mikrowellengerät mit einer Dampfgarfunktion oder ein Backofen mit einer Mikrowellenfunktion und einer Dampfgarfunktion.

In den folgenden Figuren wird die Erfindung anhand eines Ausführungsbeispiels schematisch genauer beschrieben.
- Fig.1: zeigt als Schnittdarstellung in Vorderansicht ein erfindungsgemäßes Gargerät;
- Fig.2: zeigt das erfindungsgemäße Gargerät als Schnittdarstellung in Seitenansicht;
- Fig.3: zeigt als Schnittdarstellung in Vorderansicht das erfindungsgemäße Gargerät mit einer kombinierten Dampf/Wasser-Führung gemäß einer ersten Ausgestaltung; und
- Fig.4: zeigt als Schnittdarstellung in Vorderansicht das erfindungsgemäße Gargerät mit einer kombinierten Dampf/Wasser-Führung gemäß einer zweiten Ausgestaltung.

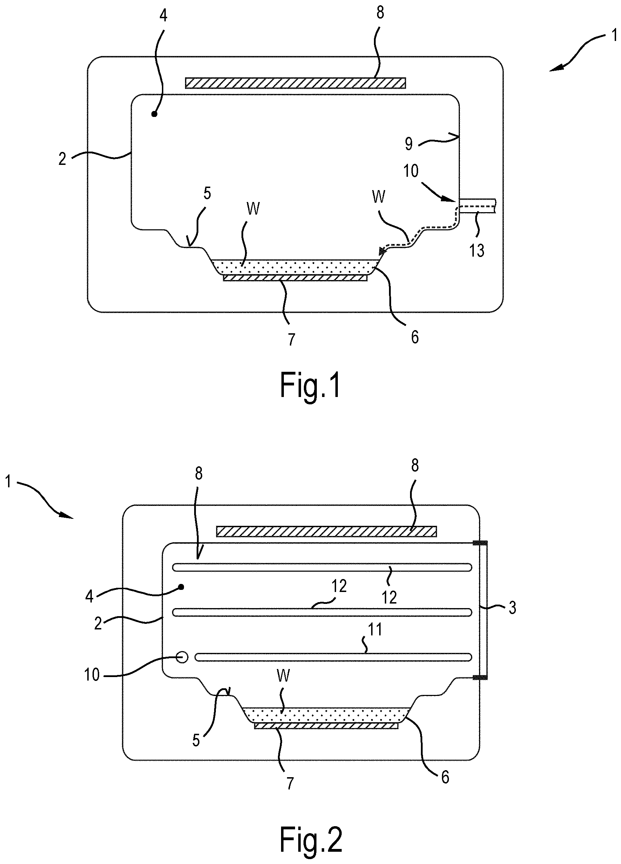

**Fig.1** zeigt als Schnittdarstellung in Vorderansicht ein Dampfgargerät 1. **Fig.2** zeigt das Dampfgargerät 1 als Schnittdarstellung in Seitenansicht. Das Dampfgargerät 1 ist hier ein Backofen mit einer Dampfgarfunktion. Das Dampfgargerät 1 weist eine Gargerätemuffel 2 auf, welche zusammen mit einer vorderseitig angebrachten Tür 3 einen Garraum 4 begrenzt. Ein Boden 5 der Gargerätemuffel 2 weist einen mittigen, schalenförmig vertieften Wasseraufnahmebereich 6 zur Aufnahme von zu verdampfendem Wasser W auf. Der Wasseraufnahmebereich 6 ist in den Boden 5 eingeprägt. An einer Unterseite des Bodens 5 ist eine Heizung 7 vorhanden.

Zum Dampfgaren wird die Heizung 7 aktiviert, um das in dem Wasseraufnahmebereich 6 befindliche Wasser W zu verdampfen und so den Garraum 4 mit Dampf zu beaufschlagen. Für eine Regelung einer Feuchtigkeit in dem Garraum 4 kann z.B. ein Luftfeuchtigkeitsfühler (o.Abb.) vorhanden sein. Die Heizung 7 kann alternativ, falls sich kein Wasser W in dem Wasseraufnahmebereich 6 befindet, als eine Unterhitze einer Backofenbetriebsart verwendet werden, ggf. zusammen mit einer Oberhitze 8 (d.h., einem oder mehreren Oberhitzeheizkörpern).

Für eine Befüllung des Wasseraufnahmebereichs 6 mit Wasser W befindet sich in einem unteren und hinteren Bereich einer Seitenwand 9 der Gargerätemuffel 2 eine Wassereinlassöffnung 10 zum Einlass von Wasser W in den Garraum 4. Die Wassereinlassöffnung 10 ist garraumseitig im Wesentlichen flächenbündig zu der sie umgebenden Seitenwand 9 angeordnet. Aus der Wassereinlassöffnung 10 in den Garraum 4 einfließendes Wasser W fließt zunächst an der Seitenwand 9 herunter und weiter über einen Seitenbereich des Bodens 5 in den Wasseraufnahmebereich 6, wobei der Wasseraufnahmebereich 6 einen tiefsten Punkt des Bodens 5 darstellt. Dabei ist hier keine dedizierte Wasserführungsrinne vorgesehen, sondern das Wasser W fließt frei in den Wasseraufnahmebereich 6 wie durch den gepunkteten Pfeil angedeutet. Möglicherweise außerhalb des Wasseraufnahmebereichs 6 geringe abstehende Mengen des Wassers W verdampfen typischerweise während des Dampfgarens mit.

Wie in Fig.2 gezeigt, ist die Wassereinlassöffnung 10 hinter einer in den Garraum 4 ragenden Auflage 11 für einen Gargutträger (o.Abb.) angeordnet. Diese Auflage 11 dient als ein Schutzelement gegenüber eine Beschädigung und/oder Verschmutzung der Wassereinlassöffnung 10. Diese Auflage 11 ist gegenüber Auflagen 12 auf anderen Einschubebenen entsprechend verkürzt.

Die Wassereinlassöffnung 10 dient gleichzeitig als eine Dampfauslassöffnung, so dass also die Wassereinlassöffnung 10 und die Dampfauslassöffnung eine kombinierte Durchlassöffnung bilden oder ineinander integriert sind. Zur weiteren Beschreibung der Ausführungsbeispiele wird die kombinierte Durchlassöffnung weiterhin als die Wassereinlassöffnung 10 bezeichnet, ohne darauf beschränkt zu sein.

Die Wassereinlassöffnung 10 wird hier mittels eines Schlauchs 13 gebildet, welcher formschlüssig, kraftschlüssig und/oder stoffschlüssig in eine eng passende Aussparung in der Gargerätemuffel 2 eingepasst ist. Alternativ kann z.B. ein festes Rohr oder Rohrsystem verwendet werden.

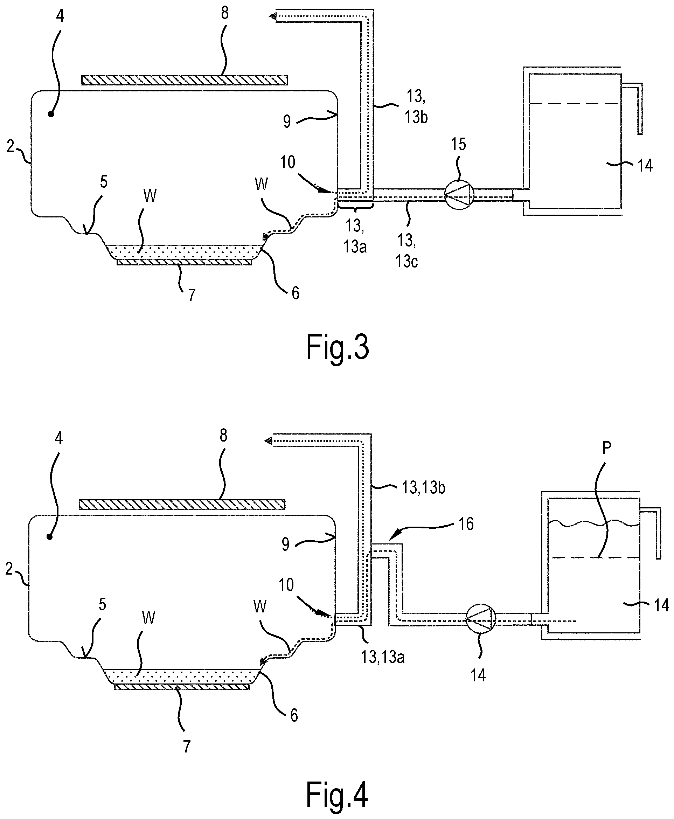

**Fig.3** zeigt als Schnittdarstellung in Vorderansicht das erfindungsgemäße Gargerät 1 mit einer kombinierten Dampf/Wasser-Führung gemäß einer ersten Ausgestaltung in einer detaillierteren Darstellung.

Der Schlauch 13 dient als ein kombinierter Wasser- und Dampfführungs-Schlauch. Der Schlauch 13 weist hinter der Wassereinlassöffnung 10 einen kombinierten Dampf/Wasser-Führungsabschnitt 13a auf, wobei sich der Dampf/Wasser-Führungsabschnitt 13a in einer vorbestimmten Entfernung von der Wassereinlassöffnung 10 in einen Dampfablasszweig 13b und einen Wasserführungszweig 13c aufteilt. Der Dampfablasszweig 13b führt nach Außen, ggf. über ein Abzugsgebläse (o.Abb.). Der Dampfablasszweig 13b geht von dem Wasserführungszweig 13c nach oben ab. Während in dem Garraum 4 befindlicher Dampf somit über den Dampf/Wasser-Führungsabschnitt 13a und den Dampfablasszweig 13b nach Außen abgeführt werden kann, kann Wasser W von einem Wasserreservoir 14 über eine Pumpe 15 durch den Wasserführungszweig 13c und durch den Dampf/Wasser-Führungsabschnitt 13a in den Garraum 4 geleitet werden. Der Dampf/Wasser-Führungsabschnitt 13a kann also gleichzeitig Wasser W und Dampf D führen, insbesondere in gegenläufiger Richtung. Bei einem ausreichend höherliegenden Wasserreservoir 14 kann auch auf die Pumpe verzichtet werden und/oder anstelle der Pumpe 15 z.B. ein Ventil vorgesehen sein. Anstelle des Wasserreservoirs 14 kann auch ein Frischwasseranschluss, o.ä. verwendet werden.

**Fig.4** zeigt als Schnittdarstellung in Vorderansicht das Gargerät 1 mit einer kombinierten Dampf/Wasser-Führung gemäß einer zweiten Ausgestaltung. In dieser Ausgestaltung wird der wasserführende Teil des Schlauchs 13, welcher sich aus dem kombinierten Dampf/Wasser-Führungsabschnitt 13a und dem Wasserführungszweig 13c zusammensetzt, umgekehrt U-förmig geführt und weist einen Scheitelpunkt 16 auf, welcher höher liegt als ein maximaler Wasserpegel P des Wasserreservoirs 14. So kann ein unbeabsichtigter Fluss von Wasser W in den Garraum 4 bei einer deaktivierten und in diesem Zustand nicht dichtenden Pumpe 15 verhindert werden. Der Scheitelpunkt 16 wird bevorzugt durch den oder in dem Wasserführungszweig 13c gebildet.

Bei beiden Ausgestaltungen der kombinierten Dampf/Wasser-Führung ergibt sich der Vorteil, dass der Dampf/Wasser-Führungsabschnitt 13a wie ein Wärmetauscher zwischen dem Dampf und dem Wasser wirkt und erstens das Wasser W vorwärmt, was eine Energieeinsparung bewirkt, und zweitens den Dampf zumindest teilweise kondensiert und so hilft, Wasser einzusparen.

Selbstverständlich ist die vorliegende Erfindung nicht auf die gezeigten Ausführungsbeispiele beschränkt. Der Schutzumfang wird durch die Ansprüche definiert.

So kann die Gargerätemuffel eine von der Wassereinlassöffnung getrennte Dampfauslassöffnung aufweisen. Speziell in diesem Fall kann die Wassereinlassöffnung ein Dichtelement aufweist, welches für Wasser durchlässig und für Dampf undurchlässig ist.

### Bezugszeichenliste

- 1: Gargerät
- 2: Gargerätemuffel
- 3: Tür
- 4: Garraum
- 5: Boden der Gargerätemuffel
- 6: Wasseraufnahmebereich
- 7: Heizung
- 8: Oberhitze
- 9: Seitenwand der Gargerätemuffel
- 10: Wassereinlassöffnung
- 11: Auflage
- 12: Auflage
- 13: Schlauch
- 13a: Dampf/Wasser-Führungsabschnitt
- 13b: Dampfablasszweig
- 13c: Wasserführungszweig
- 14: Wasserreservoir
- 15: Pumpe
- 16: Scheitelpunkt
- W: Wasser
- P: Wasserpegel

## Patentansprüche

1. Dampfgargerät (1), aufweisend
- eine Gargerätemuffel (2), welche einen mit Dampf beaufschlagbaren Garraum (4) begrenzt,
- mindestens eine Wassereinlassöffnung (10) zum Einlass von Wasser (W) in den Garraum (4) und
- einen in dem Garraum (4) befindlichen, durch das Wasser (W) befüllbaren Wasseraufnahmebereich (6),
**dadurch gekennzeichnet, dass**
- die mindestens eine Wassereinlassöffnung (10) garraumseitig flächenbündig zu einer sie umgebenden Wand (9) der Gargerätemuffel (2) angeordnet ist, dass
- die mindestens eine Wassereinlassöffnung (10) bei Vorderansicht in den Garraum (4) hinter einer in den Garraum (4) ragenden Auflage (11) für einen Gargutträger angeordnet ist und dass
- die Auflage (11) für den Gargutträger, hinter der sich die mindestens eine Wassereinlassöffnung (10) befindet, im Vergleich zu anderen Auflagen (12) verkürzt ist.

2. Dampfgargerät (1) nach Anspruch 1, **dadurch gekennzeichnet, dass** die mindestens eine Wassereinlassöffnung (10) ein Dichtelement aufweist, welches für Wasser (W) durchlässig und für Dampf undurchlässig ist.

3. Dampfgargerät (1) nach Anspruch 1, **dadurch gekennzeichnet, dass** die mindestens eine Wassereinlassöffnung (10) auch als eine Dampfauslassöffnung eingerichtet und vorgesehen ist.

4. Dampfgargerät (1) nach einem der vorhergehenden Ansprüche, **dadurch gekennzeichnet, dass** die mindestens eine Wassereinlassöffnung (10) mittels eines zugehörigen Schlauchs (13) gebildet wird.

5. Dampfgargerät (1) nach einem der vorhergehenden Ansprüche, **dadurch gekennzeichnet, dass** der Wasseraufnahmebereich (6) mittig in einem Boden (5) der Gargerätemuffel (2) ausgebildet ist.

6. Dampfgargerät (1) nach einem der vorhergehenden Ansprüche, **dadurch gekennzeichnet, dass** der Wasseraufnahmebereich (6) in die Gargerätemuffel (2) eingeprägt ist.

7. Dampfgargerät (1) nach einem der vorhergehenden Ansprüche, **dadurch gekennzeichnet, dass** die Gargerätemuffel (2) für aus der mindestens einen Wassereinlassöffnung (10) in den Garraum (4) fließendes Wasser (W) rinnenlos ausgestaltet ist.

8. Dampfgargerät (1) nach einem der vorhergehenden Ansprüche, **dadurch gekennzeichnet, dass** die Wand, an welcher die mindestens eine Wassereinlassöffnung (10) angeordnet ist, eine Seitenwand (9) ist.

## Claims

1. Steam cooking appliance (1), having
- a cooking appliance muffle (2), which delimits a cooking compartment (4) which can have steam applied to it,
- at least one water inlet opening (10) for the introduction of water (W) into the cooking compartment (4) and
- a water reception area (6) disposed in the cooking compartment (4), via which the water (W) can be filled,
**characterised in that**
- the at least one water inlet opening (10) is arranged on the cooking compartment side flush with a wall (9) of the cooking appliance muffle (2) surrounding it, **in that**
- in a front view into the cooking compartment (4) the at least one water inlet opening (10) is arranged behind a support (11) for a food carrier projecting into the cooking compartment (4) and **in that**
- the support (11) for the food carrier, behind which the at least one water inlet opening (10) is disposed, is shortened compared to the other supports (12).

2. Steam cooking appliance (1) according to claim 1, **characterised in that** the at least one water inlet opening (10) has a sealing element, which is permeable to water (W) and impermeable to steam.

3. Steam cooking appliance (1) according to claim 1, **characterised in that** the at least one water inlet opening (10) is also set up and provided as a steam outlet opening.

4. Steam cooking appliance (1) according to one of the preceding claims, **characterised in that** the at least one water inlet opening (10) is formed by means of an associated hose (13).

5. Steam cooking appliance (1) according to one of the preceding claims, **characterised in that** the water reception area (6) is embodied centrally in a base (5) of the cooking appliance muffle (2) .

6. Steam cooking appliance (1) according to one of the preceding claims, **characterised in that** the water reception area (6) is stamped into the cooking appliance muffle (2).

7. Steam cooking appliance (1) according to one of the preceding claims, **characterised in that** the cooking appliance muffle (2) is embodied without gullies for water (W) flowing from the at least one water inlet opening (10) into the cooking compartment (4).

8. Steam cooking appliance (1) according to one of the preceding claims, **characterised in that** the wall, on which the at least one water inlet opening (10) is arranged, is a side wall (9).

## Revendications

1. Appareil de cuisson à vapeur (1), comportant
- un moufle d'appareil de cuisson (2), lequel définit un espace de cuisson pouvant être alimenté en vapeur (4),
- au moins un orifice d'arrivée de l'eau (10) pour l'entrée d'eau (W) dans l'espace de cuisson (4), et
- une zone d'absorption d'eau (6) se trouvant dans cet espace de cuisson (4) et qu'on peut remplir d'eau (W), **caractérisé en ce que**
- le au moins un orifice d'admission d'eau (10) affleure, côté espace de cuisson, à une paroi (9) du moufle d'appareil de cuisson (2) entourant celui-ci, **en ce que**
- le au moins un orifice d'admission d'eau (10) est disposé, en vue de face, dans l'espace de cuisson (4) derrière un appui (11) s'avançant dans l'espace de cuisson (4) pour un support pour aliments à cuire et **en ce que**
- l'appui (11) pour le support pour aliments à cuire, se trouve derrière le au moins un orifice d'admission d'eau (10), est raccourci comparé à d'autres appuis (12).

2. Appareil de cuisson à vapeur (1) selon la revendication 1, **caractérisé en ce que** le au moins un orifice d'admission de l'eau (10) comporte un élément d'étanchéité, lequel laisse passer l'eau (W) mais ne laisse pas passer la vapeur.

3. Appareil de cuisson à vapeur (1) selon la revendication 1, **caractérisé en ce que** le au moins un orifice d'admission de l'eau (10) est également installé et prévu comme un orifice d'évacuation de la vapeur.

4. Appareil de cuisson à vapeur (1) selon l'une des revendications précédentes, **caractérisé en ce que** le au moins un orifice d'admission de l'eau (10) est formé au moyen d'un tuyau (13) associé.

5. Appareil de cuisson à vapeur (1) selon l'une des revendications précédentes, **caractérisé en ce que** la zone d'absorption de l'eau (6) est réalisée au centre dans le sol (5) du moufle de l'appareil de cuisson (2).

6. Appareil de cuisson à vapeur (1) selon l'une des revendications précédentes, **caractérisé en ce que** la zone d'absorption de l'eau (6) est empreinte dans le moufle de l'appareil de cuisson (2).

7. Appareil de cuisson à vapeur (1) selon l'une des revendications précédentes, **caractérisé en ce que** le moufle de l'appareil de cuisson (2) est configuré sans goulotte pour l'eau (W) s'écoulant dans l'espace de cuisson (4) du au moins un orifice d'admission de l'eau (10).

8. Appareil de cuisson à vapeur (1) selon l'une des revendications précédentes, **caractérisé en ce que** la paroi sur laquelle est disposé le au moins un orifice d'admission de l'eau (10) est une paroi latérale (9).
